# EUROPEAN PATENT APPLICATION

(11) **EP 4 488 723 A1**
(43) Date of publication of application: **08.01.2025**
(21) Application number: 24186593.0
(22) Date of filing: 04.07.2024
(51) Int. Cl.: G01T 1/29, G01T 7/00

(54) **PET APPARATUS AND CALIBRATION METHOD**

(30) Priority: 05.07.2023 JP 2023110624
(71) Applicant: Canon Medical Systems Corporation, Tochigi 324-0036 (JP)
(72) Inventor: INOUE, Motohiro, Otawara-shi, 324-0036 (JP)
(74) Representative: Marks & Clerk LLP

(57) **Abstract**

According to one embodiment, a positron emission tomography (PET) apparatus includes processing circuitry. The processing circuitry is configured to obtain a plurality of items of detection data each corresponding to a depth at which a gamma ray has caused an interaction in a plurality of depth-of-interaction (DOI) detectors. The processing circuitry is configured to calibrate the plurality of DOI detectors based on each of the obtained plurality of items of detection data and an ideal distribution of the plurality of items of detection data.

## Description

### FIELD

Embodiments described herein relate generally to a PET apparatus and a calibration method.

### BACKGROUND

In positron emission tomography (PET), a tracer medication introduced into a patient is concentrated at a particular position in the patient's body by the physical and bimolecular characteristics of the medication. The tracer emits a positron, and the positron collides with an electron to cause an annihilation event. In the annihilation event, two gamma rays traveling at substantially 180° apart (with 511 keV each) are generated.

For the PET apparatus, a PET scanner including a plurality of detectors arranged in a ring shape around the patient is used to detect a pair of coincidence gamma rays. The PET scanner measures a light pulse of scintillation light produced by an interaction between the incident gamma rays and the detectors. That is, the PET scanner is configured of thousands of scintillator crystals in a two-dimensional scintillator array packaged in a module together with one or more optical sensors. Thereby, the gamma rays are, in the scintillator crystals, converted into scintillation light, and are detected as scintillation events by the optical sensors.

To reconstruct a space-time distribution of the tracer based on the principles of tomography reconstruction, each of the detected events is characterized by its energy (i.e., the amount of light generated), position, and timing. By detecting two gamma rays and drawing a line between their positions, namely, a line-of-response (LOR), it is possible to estimate, along the LOR, the position where an annihilation event has occurred. Also, time of flight (ToF) technology, which measures a time difference between two gamma rays entering the detectors, and estimates, based on the time difference, the position where an annihilation event has occurred in a partial range along the LOR, is widely known.

In addition to the ToF technology, a ToF-DOI detector (hereinafter referred to as a "DOI detector"), which allows utilization of depth-of-interaction (DOI) information corresponding to a depth at which a gamma ray made incident from a surface of a scintillator crystal has caused an interaction, has recently been known. With such a DOI detector, even if, for example, an annihilation event has occurred at an edge of a field of view of a detector ring and a generated gamma ray is made incident on a scintillator crystal from a diagonal direction, it is possible to estimate a depth at which the gamma ray has caused an interaction. Of the range formed by connecting scintillator crystals with which opposing DOI detectors have caused an interaction, since the LOR can be limited to a range formed by the estimated depths, it is possible to suppress a decrease in estimation precision at the time of estimating the position where an annihilation event has occurred at the edge of the field of view. The individual scintillator crystals used in the DOI detectors can be used for calibration through irradiation of radiation rays narrowed by a collimator, etc. at each depth from side surfaces to connect DOI information with a signal output.

However, after being assembled into a detector ring, the DOI detectors cannot perform irradiation of radiation rays at each depth from the side surfaces of the individual scintillator crystals, and therefore cannot perform calibration.

### SUMMARY

In relation to the embodiments, the following disclosures are additionally given, which set forth some of the various aspects and optional features of the inventions.
(1) A PET apparatus includes processing circuitry configured to: obtain a plurality of items of detection data each corresponding to a depth at which a gamma ray has caused an interaction in a plurality of DOI detectors; and calibrate the plurality of DOI detectors based on each of the obtained plurality of items of detection data and an ideal distribution of the plurality of items of detection data.
(2) The ideal distribution may be a distribution that represents, in association with each other, a depth at which a gamma ray causes an interaction in each of the plurality of DOI detectors to be calibrated and a time difference among the plurality of DOI detectors acquiring corresponding items of detection data.
(3) The ideal distribution may be a distribution in which the time difference decreases as the depth increases.
(4) The depth represented by the ideal distribution may be a depth at which a gamma ray made incident on one of a pair of opposing DOI detectors included in the plurality of DOI detectors causes an interaction.
(5) The depth represented by the ideal distribution may be a depth at which a gamma ray made diagonally incident on a DOI detector adjacent to one of a pair of opposing DOI detectors causes an interaction.
(6) The depth represented by the ideal distribution may include both a depth at which a gamma ray that has been made incident on the plurality of DOI detectors causes an interaction and a depth at which a scattering gamma ray caused by Compton scattering of the incident gamma ray causes an interaction.
(7) The processing circuitry may be configured to correct the depth corresponding to each of the plurality of items of detection data in the plurality of DOI detectors to be calibrated to be close to the ideal distribution.
(8) The processing circuitry may be configured to correct, for each of the plurality of items of detection data, a time shift due to a difference in a rise time between output signals from the plurality of DOI detectors prior to the correcting based on the ideal distribution.
(9) The processing circuitry may be configured to correct a time difference between the plurality of DOI detectors to be calibrated having acquired the detection data to be close to the ideal distribution.
(10) The ideal distribution may be a distribution that represents, in association with each other, a depth at which a gamma ray causes an interaction in each of the plurality of DOI detectors to be calibrated and a count of photons produced by the interaction with the gamma ray in each of the plurality of DOI detectors to be calibrated.
(11) The ideal distribution may be a distribution in which the count decreases as the depth increases.
(12) The ideal distribution may be a distribution that follows I=Io exp(-pt), where t denotes the depth, I denotes the count at the depth t, Io denotes the count in a vicinity of a surface of each of the plurality of DOI detectors, and µ denotes an attenuation coefficient of the gamma ray in each of the plurality of DOI detectors.
(13) A calibration method includes: obtaining a plurality of items of detection data each corresponding to a depth at which a gamma ray has caused an interaction in a plurality of DOI detectors; and calibrating the plurality of DOI detectors based on each of the obtained plurality of items of detection data and an ideal distribution of the plurality of items of detection data.

### BRIEF DESCRIPTION OF THE DRAWINGS

FIG. 1 is a diagram showing a configuration of a PET apparatus according to a first embodiment.
FIG. 2 is a schematic diagram showing a configuration of a DOI detector according to the first embodiment.
FIG. 3 is a schematic diagram for illustrating an ideal distribution according to the first embodiment.
FIG. 4 is a schematic diagram for illustrating a gamma ray and a velocity of a photon in a scintillator crystal according to the first embodiment.
FIG. 5 is a schematic diagram for illustrating DOI information and an ideal distribution according to the first embodiment.
FIG. 6 is a schematic diagram for illustrating a count and an ideal distribution according to the first embodiment.
FIG. 7 is a flowchart for illustrating an operation according to the first embodiment.
FIG. 8 is a flowchart for illustrating step ST20 of FIG. 7.
FIG. 9 is a schematic diagram for illustrating step ST21 of FIG. 8.
FIG. 10 is a schematic diagram for illustrating step ST22 of FIG. 8.
FIG. 11 is a schematic diagram for illustrating a walk correction.
FIG. 12 is a schematic diagram for illustrating an ideal distribution according to a modification of the first embodiment.
FIG. 13 is a schematic diagram for illustrating Compton scattering according to another modification of the first embodiment.
FIG. 14 is a flowchart for illustrating an operation according to a second embodiment.
FIG. 15 is a schematic diagram for illustrating DOI information and an ideal distribution according to the second embodiment.

### DETAILED DESCRIPTION

Hereinafter, embodiments will be described with reference to the drawings. In the description that follows, redundant descriptions will be omitted by assigning identical reference numerals to substantially identical parts in different drawings.

### <First Embodiment>

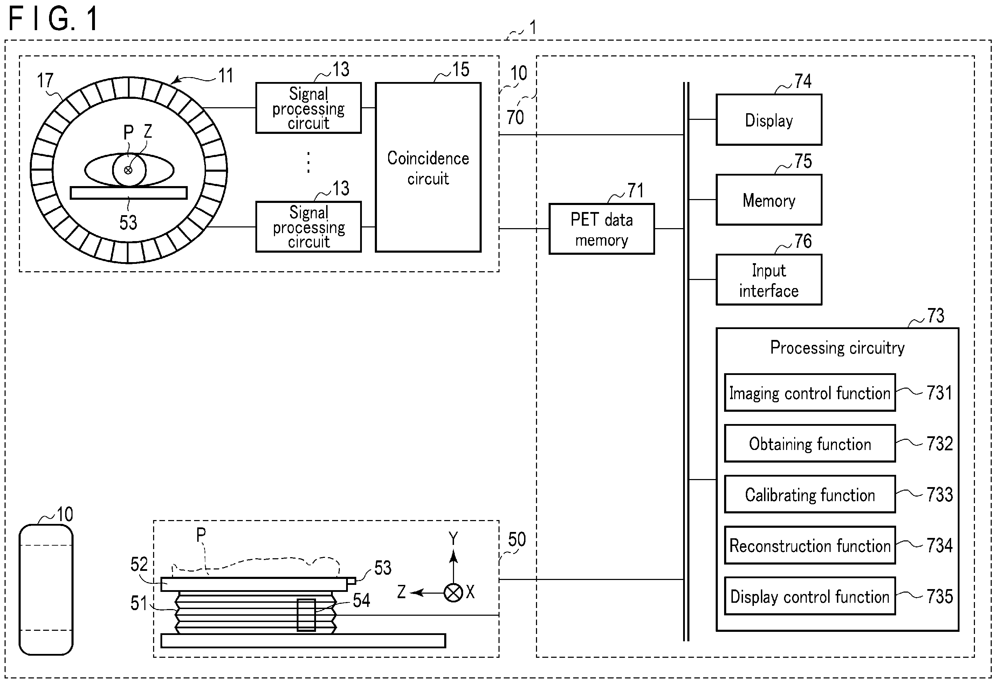

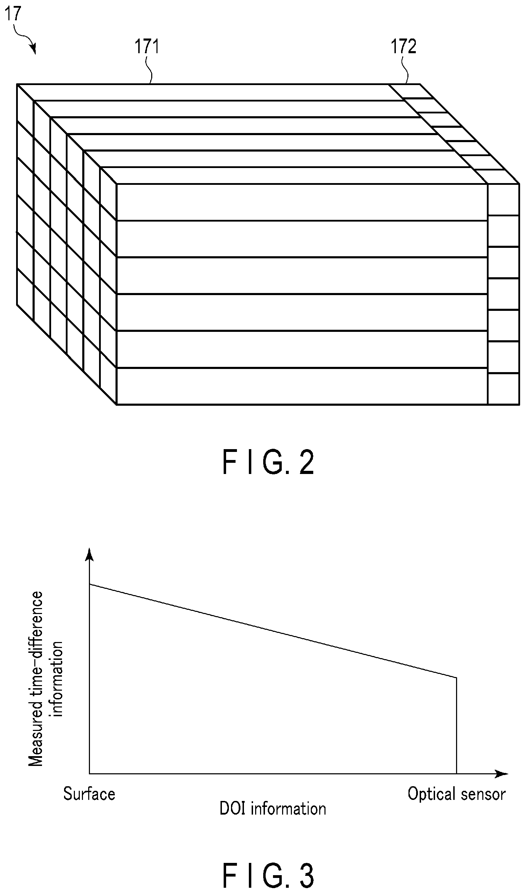

FIG. 1 is a diagram showing a configuration of a positron emission tomography (PET) apparatus according to a first embodiment, and FIG. 2 is a schematic diagram showing a configuration of a depth-of-interaction (DOI) detector. As shown in FIG. 1, the PET apparatus 1 includes a PET gantry 10, a couch 50, and a console 70. Typically, the PET gantry 10 and the couch 50 are installed in a common examination room. The console 70 is installed in a control room adjacent to the examination room. The PET gantry 10 is an imaging apparatus that performs PET imaging of a subject P. The couch 50 movably supports a couch top 53 on which the subject P to be imaged is mounted. The console 70 is a computer that controls the PET gantry 10 and the couch 50. The subject P is, for example, a phantom or a human body.

The PET gantry 10 includes a detector ring 11, a signal processing circuit 13, and a coincidence circuit 15.

The detector ring 11 includes a plurality of DOI detectors 17 aligned on a circumference around a central axis Z. A field of view (FOV) is set in an opening of the detector ring 11. The subject P is positioned in such a manner that the FOV includes a site to be imaged of the subject P. If the subject P is a human body, a medication labeled by a positron-emitting radionuclide is administered to the subject P, and a positron is emitted by the positron-emitting radionuclide. If the subject P is a phantom, a positron is emitted from a radiation source arranged at a predetermined position in the phantom. The emitted positron annihilates with a peripheral electron, and thereby a pair of gamma rays is produced.

The DOI detector 17 detects the gamma rays emitted from the subject P, and generates an electric signal corresponding to an amount of light of the detected gamma rays. It is preferable that the DOI detector 17 be configured in such a manner that optical sensors are provided only on one surfaces of scintillator crystals, and DOI information can be obtained without degrading a temporal resolution. Each DOI detector 17 includes, for example, a plurality of scintillator crystals 171 and a plurality of optical sensors 172, as shown in FIG. 2. As the structure of the DOI detector 17, a many-to-many connection in which m1 scintillator crystals 171 and m2 optical sensors 172 are connected (m1:m2 connection), for example, is used. Here, m1 and m2 are mutually different natural numbers, with one of them greater than the other. The many-to-many connection may include a many-to-one connection; however, either a many-to-many connection or a one-to-many connection is more preferable, from the viewpoint of easily performing centroid computation. From the viewpoint of performing centroid computation, the many-to-many connection does not include a one-to-one connection. The DOI detector may be referred to as a "TOF-DOI detector".

Upon receiving gamma rays emitted from inside the subject P, the scintillator crystals 171 produce light (scintillation photons). That is, the scintillator crystals 171 convert the incident gamma rays into photons.

The optical sensors 172 are provided on one surfaces of the scintillator crystals 171, and generate an electric signal according to the amount of light produced by the scintillator crystals 171. For the optical sensors 172, a photomultiplier tube (PMT) or a silicon photomultiplier (SiPM), for example, can be suitably used. The produced electric signal is supplied to the signal processing circuit 13.

The signal processing circuit 13 generate single-event data based on the electric signal from the DOI detector 17. Specifically, the signal processing circuit 13 perform a detection-time measuring process, a position calculation process, and an energy calculation process. The signal processing circuit 13 is realized by an application-specific integrated circuit (ASIC), a field-programmable gate array (FPGA), a complex programmable logic device (CPLD), or a simple programmable logic device (SPLD) configured to execute a detection-time measuring process, a position calculation process, and an energy calculation process.

In the detection-time measuring process, the signal processing circuit 13 measures a time of detection of gamma rays by the DOI detector 17. Specifically, the signal processing circuit 13 monitors a peak value of an electric signal from the DOI detector 17, and measures a time at which the peak value exceeds a preset threshold value as a detection time. In other words, the signal processing circuit 13 electrically detects gamma rays upon detecting a peak value exceeding a threshold value. In the position calculation process, the signal processing circuit 13 calculates, based on an electric signal from the DOI detector 17, a position of incidence of a pair of annihilating gamma rays. The position of incidence of the gamma rays corresponds to position coordinates in a scintillator on which the gamma rays have been made incident. In the energy calculation process, the signal processing circuit 13 calculates, based on the electric signal from the DOI detector 17, an energy value of the detected pair of gamma rays. Data on the detection time, data on the position coordinates, and data on the energy value relating to a single event are associated with each other. A combination of the data on the energy value, the data on the position coordinates, and the data on the detection time relating to the single event is referred to as "single-event data". The single-event data is sequentially generated every time a pair of gamma rays is detected. The generated single-event data is supplied to a coincidence circuit 15.

The coincidence circuit 15 subjects the single-event data from the signal processing circuit 13 to a coincidence process. As hardware resources, the coincidence circuit 15 is realized by an ASIC, an FPGA, a CPLD, or an SPLD configured to execute a coincidence process. In the coincidence process, the coincidence circuit 15 repeatedly specifies, from the single-event data that is supplied repeatedly, single-event data relating to two single events that fall within a predetermined time frame. It can be estimated that the pair of single events is derived from the gamma rays caused by an annihilation event. The pair of single events is collectively referred to as a "coincidence event". A line connecting a pair of DOI detectors 17 (depths in the scintillator crystals, more specifically) that have detected the gamma rays will be referred to as a "line of response (LOR)". The event data relating to a pair of events configuring the LOR is referred to as "coincidence-event data". The coincidence-event data and the single-event data are transmitted to the console 70. If the coincidence-event data and the single-event data are not particularly distinguished from each other, they will be referred to as "PET event data". The coincidence-event data, the single-event data, and the PET event data are examples of the detection data. The gamma rays radiating from the radiation source administered into the subject P may be referred to as "gamma rays radiating from the subject P". Also, the radiation source may also be referred to as a "positron emission source", a "positron-emitting radionuclide", or a "radioactive isotope". The detector ring 11, the signal processing circuit 13, and the coincidence circuit 15 may be referred to as a "detection data obtaining unit" that obtains detection data.

In the above-described configuration, the signal processing circuit 13 and the coincidence circuit 15 are included in the PET gantry 10; however, the configuration of the present embodiment is not limited thereto. For example, the coincidence circuit 15 or both the signal processing circuit 13 and the coincidence circuit 15 may be included in an apparatus separate from the PET gantry 10. A single coincidence circuit 15 may be provided for a plurality of signal processing circuits 13 mounted on the PET gantry 10, or a plurality of coincidence circuits 15 may be respectively provided for a plurality of groups into which a plurality of signal processing circuits 13 mounted on the PET gantry 10 are divided.

The couch 50, on which the subject P to be scanned is mounted, moves the mounted subject P. The couch 50 includes a base 51, a supporting frame 52, a couch top 53, and a couch driving unit 54. The base 51 is installed on a floor surface. The base 51 is a housing that supports the supporting frame 52 so as to be movable in a vertical direction (Y-axis direction) with respect to the floor surface. The supporting frame 52 is a frame provided at an upper portion of the base 51. The supporting frame 52 slidably supports the couch top 53 along the central axis Z. The couch top 53 is a flexible plate on which the subject P is placed. In the present embodiment, a longitudinal direction of the couch top 53 of the couch 50 is defined as a Z-axis direction, an axial direction orthogonal to the Z-axis direction and horizontal to the floor surface is defined as an X-axis direction, and an axial direction orthogonal to the Z-axis direction and perpendicular to the floor surface is defined as a Y-axis direction. The couch 50 is arranged in such a manner that a longitudinal axis of the couch top 53 becomes parallel to the central axis Z of the opening of the PET gantry 10.

The couch driving unit 54 is contained in the housing of the couch 50. The couch driving unit 54 is a motor or an actuator that produces power for moving the supporting frame 52 and the couch top 53 on which the subject P is placed. The couch driving unit 54 operates under the control of the console 70, etc.

The console 70 is a device including a PET data memory 71, processing circuitry 73, a display 74, a memory 75, and an input interface 76. Data communications among, for example, the PET data memory 71, the processing circuitry 73, the display 74, the memory 75, and the input interface 76 are carried out via a bus.

The PET data memory 71 is a storage device that stores single-event data and coincidence-event data transmitted from the PET gantry 10. The PET data memory 71 is a storage device such as a hard disk drive (HDD), a solid-state drive (SSD), an integrated circuit memory device, etc.

The processing circuitry 73 controls the entire operation of the PET apparatus 1 in accordance with an electric signal of an input operation output from the input interface 76. The processing circuitry 73 includes, as hardware resources, a processor such as a CPU, an MPU, a graphics processing unit (GPU), and a memory such as a ROM or a RAM. By executing various programs read from the memory, the processing circuitry 73 realizes an imaging control function 731, an obtaining function 732, a calibrating function 733, a reconstruction function 734, and a display control function 735. The imaging control function 731, the obtaining function 732, the calibrating function 733, the reconstruction function 734, and the display control function 735 may be implemented by single-board processing circuitry 73, or may be dispersively implemented by multiple-board processing circuitry 73. The various programs may include, for example, programs for causing the computer to realize the obtaining function 732 and the calibrating function 733. The various programs may include, for example, a program for causing the PET apparatus 1 to execute a calibration method. The calibration method may include obtaining a plurality of items of detection data each corresponding to a depth at which a gamma ray has caused an interaction in a plurality of DOI detectors 17, and calibrating the DOI detectors 17 based on the obtained items of detection data, and an ideal distribution of the plurality of items of detection data. Such programs may be read from the memory 75. The memory in the processing circuitry 73 and the memory 75 are examples of non-transitory computer-readable storage media.

With the imaging control function 731, the processing circuitry 73 synchronously controls the PET gantry 10 and the couch 50 to perform PET imaging. Also, the processing circuitry 73 is capable of executing positioning scanning with the PET gantry 10.

The obtaining function 732 obtains a plurality of items of detection data each corresponding to a depth at which a gamma ray has caused an interaction in a plurality of DOI detectors 17. Each item of detection data is, for example, single-event data. The obtaining function 732 and the processing circuitry 73 are examples of an obtaining unit.

The calibrating function 733 calibrates the DOI detectors 17 based on the obtained items of detection data and the ideal distribution of the plurality of items of detection data. For example, the calibrating function 733 corrects a depth corresponding to an item of detection data in a DOI detector 17 to be calibrated to be close to the ideal distribution. The calibrating function 733 may correct, for the detection data, a time shift due to a difference in a rise time between output signals from the DOI detectors 17 prior to the correction based on the ideal distribution. The calibrating function 733 and the processing circuitry 73 are examples of the calibrating unit.

The ideal distribution is information indicating a correlation between ideal time-difference information and DOI information. The ideal distribution is, for example, a distribution that represents, in association with each other, a depth at which a gamma ray causes an interaction in a DOI detector 17 to be calibrated and a time difference among a plurality of DOI detectors 17 acquiring corresponding items of detection data. In the example shown in FIG. 3, the ideal distribution represents, in association with each other, measured time-difference information indicating a difference in measured time when a pair of gamma rays has been detected, and DOI information indicating a depth at which an interaction has occurred from a surface of the scintillator crystal 171 to the optical sensors 172. The measured time-difference information may be referred to as "timing jitter information".

The depth represented by the ideal distribution is a depth at which a gamma ray made incident on one of a pair of opposing DOI detectors 17 causes an interaction. In other words, the depth represented by the ideal distribution is a depth at which one of the pair of gamma rays causes an interaction in the scintillator crystal 171. The ideal distribution is a distribution in which the time difference decreases as the depth increases, and has, for example, a linear or curved shape.

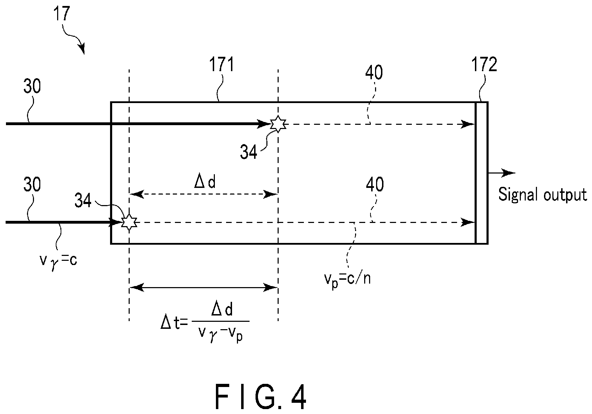

The time difference represented by the ideal distribution may include, for the gamma-ray measured time difference (TOF information) between a pair of DOI detectors 17, a time difference Δt between a gamma ray 30 and a photon 40 caused by an interaction 34 of the gamma ray 30 each traveling in the scintillator crystal 171, as shown in FIG. 4.

In a first path shown in the upper part of FIG. 4, a depth at which the interaction 34 has occurred is positioned at substantially the center of the scintillator crystal 171. In a second path shown in the lower part of FIG. 4, a depth at which the interaction 34 has occurred is positioned on the surface side of the scintillator crystal 171. It is assumed herein that a distance between the depth at the occurrence of the interaction 34 in the first path and the depth at the occurrence of the interaction 34 in the second path is Δd, and the velocity of the gamma ray 30 in the scintillator crystal 171 is vγ(=c) (where c denotes the velocity of light). It is also assumed that the velocity of the photon 40 in the scintillator crystal 171 is vp (=c/n) (where n denotes a reflectivity of the scintillator crystal 171). At this time, a time difference Δt between the gamma ray 30 and the photon 40 each traveling in the scintillator crystal 171 is expressed by the formula: Δt=Δd/(vγ-cp).

That is, the velocity vγ of the gamma ray 30 remains substantially the same in the scintillator crystal 171, but the velocity vp of the photon 40 produced after the interaction 34 decreases under the influence of refraction of the scintillator crystal 171. Accordingly, the further the position of the depth at the occurrence of the interaction 34 is from the optical sensors 172, the longer it takes until the gamma ray 30 is detected by the optical sensors 172 (as shown in the second path in the lower part of FIG. 4). In other words, the time until the gamma ray 30 is detected reduces the closer the position of the depth at the occurrence of the interaction 34 is to the optical sensors 172 (as shown in the first path in the upper part of FIG. 4). In this manner, the measured time obtained from a signal output from the optical sensors 172 varies according to the depth at the occurrence of the interaction 34. Accordingly, as shown in FIG. 3, a proportional relationship is satisfied between the depth represented by the ideal distribution (DOI information) and the measured time difference (TOF information) as the ideal correlation.

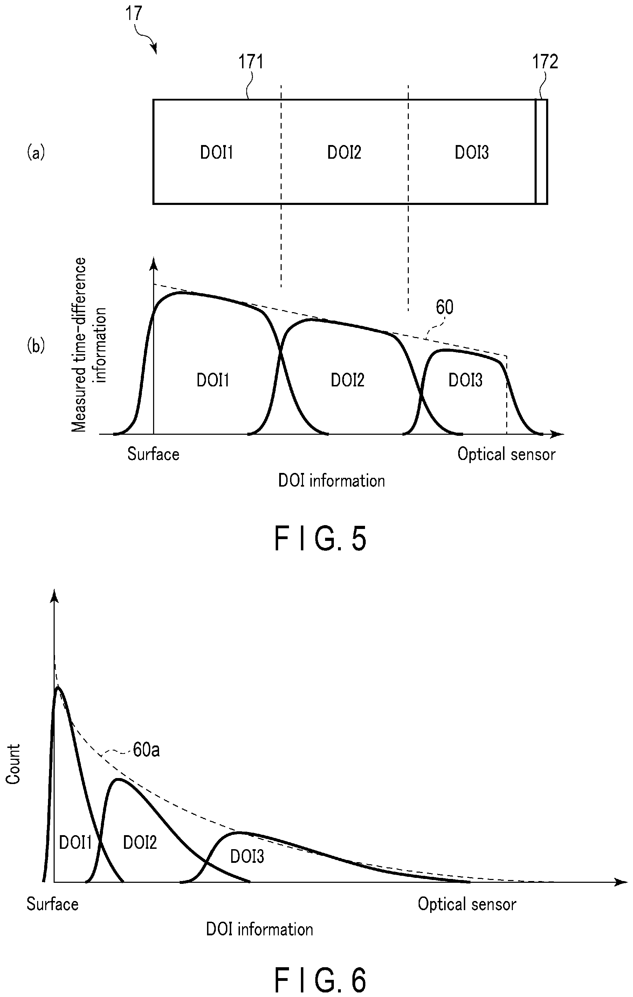

However, there is a variation in the temporal resolution of the PET gantry 10 and the accuracy of time information provided by the optical sensors 172. Thus, in actuality, the relationship between the DOI information and the measured time difference does not assume a linear shape as shown in FIG. 3, but assumes a plurality of gentle-slope distributions overlapping at their edges, as shown in FIG. 5. That is, FIG. 5(a) shows a case where the actual DOI information is divided into three items in a depth direction of the scintillator crystal 171. However, the number of items into which the DOI information is divided in the depth direction is not limited to three. In FIG. 5, a DOI information item denoting a depth at a position on the crystal surface side is denoted as "DOI1", a DOI information item denoting a depth at a substantially central position is denoted as "DOI2", and a DOI information item denoting a depth at a position on the side of the optical sensors 172 is denoted as "DOI3". FIG. 5(b) shows a relationship between the DOI information divided into the three items and the measured time difference. In FIG. 5(b), the relationship between the measured time difference and the actual DOI information items DOI1 to DOI3 is shown in such a manner that a plurality of convex distributions each denoting a proportional relationship for each of the DOI information items DOI1, ..., and DOI3 overlap at their edges. If the ideal distribution 60 denoting the above-described proportional relationship is superimposed on the actual relationship, an error of each of the distributions of the respective DOI information items from the ideal distribution 60 becomes large at their overlapping edges. Accordingly, the calibrating function 733 corrects the DOI information in the DOI detector 17 to be calibrated so as to be close to the ideal distribution 60.

For the ideal distribution, a correlation between a count of ideal events and DOI information may be used, to increase the precision. The ideal distribution may be expressed in, for example, a curved shape showing a relationship between a count of photons 40 into which gamma rays 30 have been converted and a depth represented by DOI information, as shown in FIG. 6. In FIG. 6, the ideal distribution 60a is a distribution that represents, in association with each other, a depth at which a gamma ray 30 causes an interaction 34 in the DOI detector 17 to be calibrated and a count of photons 40 produced by the interaction 34 with the gamma ray 30 in the DOI detector 17 to be calibrated. The ideal distribution 60a is a distribution in which the count decreases as the depth increases. The ideal distribution 60a may be, for example, a distribution that follows I=Io exp(-µt), where t denotes a depth, I denotes a count at the depth t, Io denotes a count in the vicinity of the surface of the DOI detector 17, and µ denotes an attenuation coefficient of the gamma ray 30 in the DOI detector 17. The DOI detector 17 may include a plurality of types of scintillator crystals 171 along a depth direction between the crystal surfaces and the optical sensors 172. As the plurality of types of scintillator crystals 171, a substance having different reactive cross-sections, for example, may be suitably used. In this case, an ideal distribution that reflects different reactive cross-sections may be used. The ideal distribution 60a shown in FIG. 6 corresponds to the case where the scintillator crystals 171 are single crystals. In FIG. 6, the relationship between the actual DOI information items DOI1 to DOI3 and the count is shown in such a manner that hill-like distributions respectively denoting the DOI information items DOI1, ..., DOI3 overlap at their edges. If the ideal distribution 60a expressed by the above-described exponential function is superimposed on the actual relationship, an error of each of the distributions of the respective DOI information items from the ideal distribution 60a becomes large at their overlapping edges. Accordingly, the calibrating function 733 corrects the DOI information in the DOI detector 17 to be calibrated so as to be close to the ideal distribution 60a.

With the reconstruction function 734, the processing circuitry 73 reconstructs a PET image showing a distribution of the positron-emitting radionuclide in the subject P, based on coincidence-event data transmitted from the PET gantry 10.

With the display control function 735, the processing circuitry 73 displays a variety of information on the display 74. The processing circuitry 73 displays, for example, a PET image reconstructed by the reconstruction function 734.

The display 74 displays a variety of information under the control of the processing circuitry 73 with the display control function 735. For the display 74, a cathode-ray tube (CRT) display, a liquid crystal display, an organic electroluminescence (EL) display, a light-emitting diode (LED) display, a plasma display, or any other displays known in the present technical field, for example, may be suitably employed.

The memory 75 is a storage device such as an HDD, an SSD, or an integrated circuit memory device configured to store various information. The memory 75 may also be a drive, etc. configured to read and write various information to and from a compact disc read-only memory (CD-ROM) drive, a Digital Versatile Disc (DVD) drive, a portable storage medium such as a flash memory, etc.

The input interface 76 inputs various instructions from the user. Specifically, the input interface 76 is connected to an input device. Examples of the input device that may be employed include a keyboard, a mouse, a trackball, a joystick, a touchpad, a touchscreen in which a display screen and a touch pad are made integral, noncontact input circuity using an optical sensor, speech input circuitry, various switches, etc. The input interface 76 supplies an output signal from the input device to the processing circuitry 73 via a bus. Herein, the input interface 76 does not necessarily include a physical operational component such as a mouse, a keyboard, etc. Examples of the input interface 76 include electric signal processing circuitry that receives an electric signal corresponding to an input operation from an external input device provided separately from the apparatus, and outputs the electric signal to the processing circuitry 73.

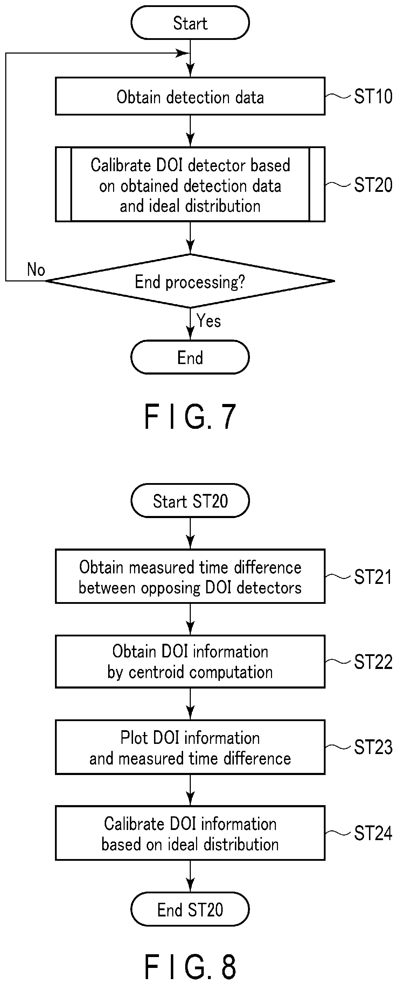

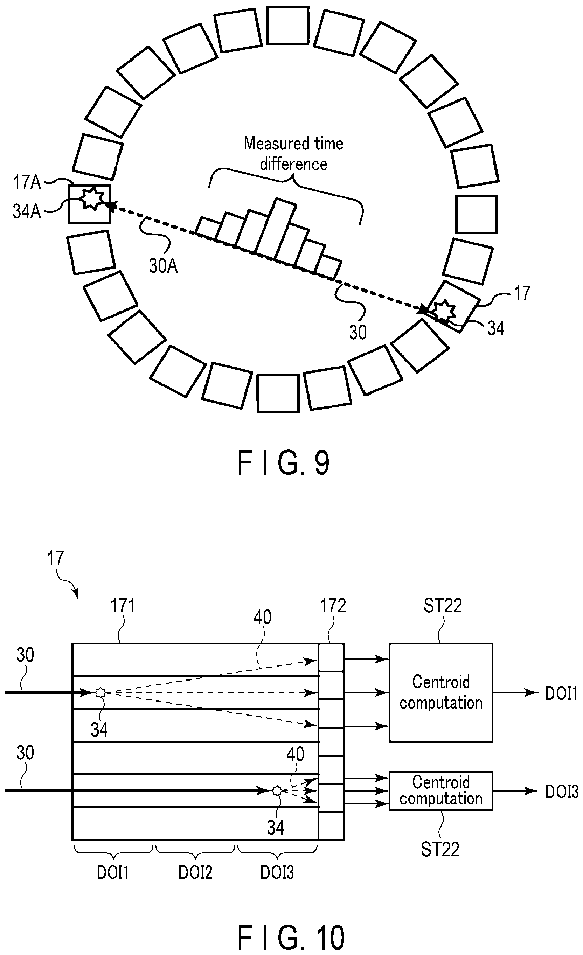

Next, an operation of calibrating the DOI detector 17 by the PET apparatus 1 with the above-described configuration will be described using the flowcharts shown in FIGS. 7 and 8 and the schematic diagrams shown in FIGS. 9 to 11.

First, the processing circuitry 73 of the PET apparatus 1 controls the PET gantry 10, and executes PET imaging. Through the PET imaging, coincidence-event data based on a signal output from the DOI detector 17 of the detector ring 11 is collected into the PET data memory 71 in the console 70. Each item of the coincidence-event data includes a pair of items of single-event data (an item of detection data).

Thereafter, at step ST10, the processing circuitry 73 obtains, from the PET data memory 71, a plurality of items of detection data each corresponding to a depth at which a gamma ray has caused an interaction in the plurality of DOI detectors 17.

After step ST10, the processing circuitry 73 calibrates, at step ST20, the DOI detectors 17 based on the obtained items of detection data and the ideal distribution of the plurality of items of detection data. Step ST20 includes steps ST21 to ST24, as shown in FIG. 8.

At step ST21, the processing circuitry 73 obtains a measured time difference between opposing DOI detectors 17 and 17A, as shown in FIG. 9. The processing circuitry 73 aggregates the measured time difference between the DOI detectors 17 and 17A as a timing histogram, without accounting for the depth position at the occurrence of the interaction 34. The timing histogram, in which a large number of DOI information items (depth positions) are mixed, is in the shape of a hill that has a peak at a time difference at which the number of interactions 34 is the largest, with deviations at the left and right. It is preferable that such a deviation caused by, for example, a relative delay between signal paths from the optical sensors 172 configured to detect light and output a signal to the signal processing circuit 13 that performs a detection time measuring process, be calibrated. Such a calibration may be referred to as a "timing calibration".

An additional explanation will be given of the timing calibration. As shown in FIG. 9, an LOR including a first progression and a second progression corresponding to trajectories of gamma rays 30 and 30A detected at the DOI detectors 17 and 17A is drawn between the position of the DOI detector 17 and the position of the DOI detector 17A. The LOR includes the first progression and the second progression over which the gamma rays 30 and 30A have propagated. A difference between a length L1 of the first progression corresponding to the trajectory of the gamma ray 30 and a length L2 of the second progression corresponding to the trajectory of the gamma ray 30A (L1-L2) corresponds to a distance between a position of each of the DOI detectors 17 and 17A and a position of the radiation source. Such a difference (L1-L2) is used, together with the velocity of light c, for calculation of the measured time difference Δt_TOF between two detection events. The measured time difference Δt_TOF is denoted by the formula Δt_TOF=t1-t2=(L1-L2)/c. However, the times t1 and t2 are measured times at which the interactions 34 and 34A have been detected. Accordingly, the obtained measured time difference is subjected to a calibration (a timing calibration) based on a comparison with the calculated measured time difference. Such a calibration is improved by repeatedly performing statistical analysis of the measured results to minimize the statistical uncertainty.

After step ST21, the processing circuitry 73 obtains, at step ST22, DOI information by performing centroid computation based on a signal output from the optical sensors 172 which have detected a photon 40 into which a gamma ray 30 has been converted. The centroid computation is performed based on the characteristics that, as shown in FIG. 10, for example, photons 40 are detected in a wider range the farther the position of the depth at the occurrence of the interaction 34 is from the optical sensors 172, and photons 40 are detected in a smaller range the closer the position of the depth at the occurrence of the interaction 34 is to the optical sensors 172. Through the centroid computation, DOI information denoting a depth at the occurrence of the interaction 34 is obtained based on a breadth of photons 40.

After step ST22, the processing circuitry 73 plots, at step ST23, the DOI information obtained at step ST22 and the measured time difference obtained at step ST21 on a graph representing the DOI information on the lateral axis and the measured time difference on the longitudinal axis. At this time, it is preferable that the processing circuitry 73 perform a walk correction that corrects a time shift due to the increasing delay of a rise of a signal pulse as the energy of the detected gamma ray decreases.

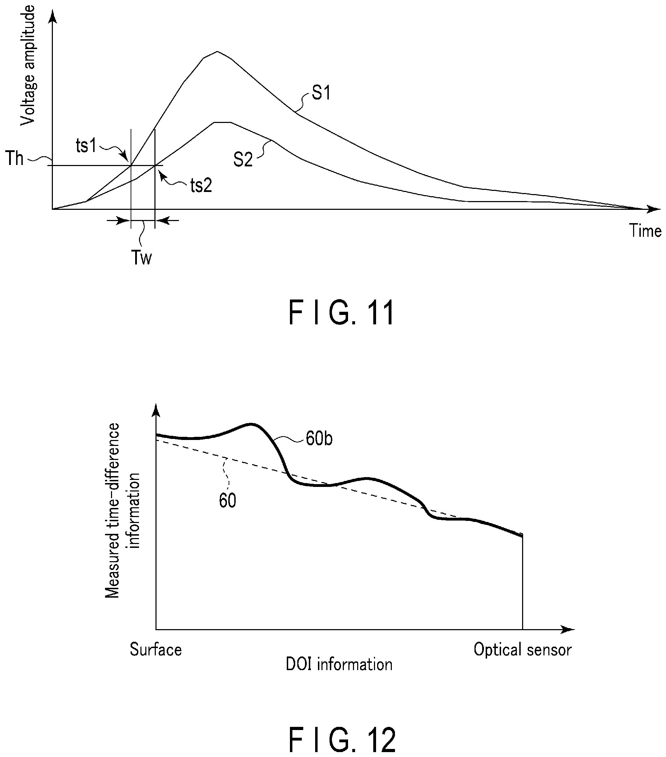

That is, a walk correction is a technology that corrects a time shift Tw generated from a difference between rise times ts1 and ts2 during which two signal pulses S1 and S2 having arrived at the same time exceed a threshold value Th, as shown in FIG. 11, for example. In FIG. 11, the lateral axis denotes time, and the longitudinal axis denotes voltage amplitude. The two signal pulses S1 and S2 have the same shape in different sizes. A signal pulse S2 has a smaller signal peak height than the signal peak height of the other signal pulse S1. Being of different sizes, the two signal pulses S1 and S2 are recorded as having occurred at different times even though they have arrived at the same time. The difference in the recorded arrival time occurs as a result of rise edges of signal amplitudes of the signal pulses S1 and S2 exceeding a threshold value Th at different times. For example, the signal pulse S1 reaches the threshold value Th at a rise time ts1. The signal pulse S2 reaches the threshold value Th at a rise time ts2. Since the rise time ts2 of the signal pulse S2 is longer (later) than the rise time ts1 of the signal pulse S1, the recorded arrival time may include a time shift (Tw) due to a time walk. Since, for example, the rise time of the signal pulse decreases as the energy becomes higher, it is preferable to perform a walk correction according to the magnitude of the energy. A time shift due to a time walk is, for example, calculated as a function of a recorded gamma-ray energy. A gamma-ray energy (e.g., a voltage amplitude) for a signal pulse may be, for example, based on an integral area under a signal curve, a peak height of the signal pulse, an amount of time exceeding a threshold value, or other measured amounts monotonically related to the gamma-ray energy. A walk correction may be performed based on curve fitting of a predetermined functional format by selecting a coefficient that minimizes an error function (e.g., a mean squared error, MSE) between a functional format and an empirically derived amount (i.e., a measured time shift and an energy of the pulse). Alternatively, a walk correction may be performed using a lookup table of empirically measured values from which a time shift due to a timewalk value may be interpolated/outerpolated.

After step ST23, the processing circuitry 73 calibrates, at step ST24, the DOI information based on an ideal distribution. That is, the processing circuitry 73 corrects the DOI information in the DOI detector 17 to be calibrated so as to be close to the ideal distribution 60. With the foregoing, step ST20 including steps ST21 to ST24 ends.

Returning back to FIG. 7, after step ST20, the processing circuitry 73 determines, at step ST30, whether or not the calibration is to be ended, and if the calibration is determined not to be ended, returns to step ST10 and repeatedly executes processing at steps ST10 to ST30. The processing circuitry 73 stores ID information for identifying all the DOI detectors 17 of the detector ring 11 and a calibration completion flag in association with each other in the memory 75, and determines, based on the stored content, that the calibration is not to be ended if there is a DOI detector 17 that has not yet been calibrated. On the other hand, if it is determined that the calibration is to be ended, the processing circuitry 73 ends the processing.

As described above, according to the first embodiment, the processing circuitry 73 obtains a plurality of items of detection data each corresponding to a depth at which a gamma ray has caused an interaction in the plurality of DOI detectors 17 and 17A. The processing circuitry 73 calibrates the DOI detectors 17 based on a corresponding item of the obtained detection data and the ideal distribution 60 of the plurality of items of detection data. It is thereby possible to calibrate the DOI detectors using an ideal distribution of the detection data, unlike the conventional technique of performing irradiation of radiation rays at each depth from side surfaces.

Also, according to the first embodiment, the ideal distribution 60 is, for example, a distribution that represents, in association with each other, a depth at which a gamma ray causes an interaction in DOI detectors 17 and 17A to be calibrated and a time difference among a plurality of DOI detectors 17 acquiring corresponding items of detection data. Accordingly, it is possible, in addition to the above-described effects, to calibrate the DOI detectors based on a depth at which a gamma ray causes an interaction and a time difference for each item of detection data to be acquired. For example, the DOI detectors can be calibrated based on DOI information indicating a depth and TOF information indicating a time difference. In addition, it is possible, even with a large-scale PET apparatus 1, to easily provide high-precision DOI information and TOF information. For example, the PET apparatus 1 obtains, from the optical sensors 172 provided on one surface of the DOI detector 17, DOI information based on a breadth of photons 40, and obtains measured time-difference information between a pair of opposing DOI detectors 17 and 17A. With the above-described PET apparatus 1, which can be realized with a simple configuration, it is possible to obtain high-precision DOI information and TOF information through calibration based on an ideal distribution.

Also, according to the first embodiment, the ideal distribution 60 is a distribution in which the time difference decreases as the depth increases. Accordingly, it is possible, in addition to the above-described effects, to calibrate the DOI detectors with increasing precision the deeper the depth at which the gamma rays cause an interaction.

According to the first embodiment, the depth represented by an ideal distribution 60 is a depth at which a gamma ray made incident on a DOI detector 17, which is one of a pair of opposing DOI detectors 17, 17A, causes an interaction. Accordingly, advantageous effects similar to the above-described effects are achieved.

According to the first embodiment, the processing circuitry 73 corrects a depth corresponding to an item of detection data in a DOI detector 17 to be calibrated to be close to the ideal distribution 60. Accordingly, it is possible, in addition to the above-described effects, to improve a spatial resolution relating to a depth if, for example, the spatial resolution is lower than a temporal resolution relating to a time difference.

Also, according to the first embodiment, the processing circuitry 73 is configured to correct, for detection data, a time shift due to a difference in a rise time between output signals from DOI detectors 17 prior to correction based on an ideal distribution 60. Accordingly, it is possible, in addition to the above-described effects, to improve the temporal resolution relating to a time at which each item of detection data is acquired.

Moreover, according to the first embodiment, an ideal distribution 60a may be a distribution that represents, in association with each other, a depth at which a gamma ray causes an interaction in a DOI detector to be calibrated and a count of photons produced by an interaction with the gamma ray in the DOI detector to be calibrated. In this case, in addition to the above-described effect, it is possible to calibrate the DOI detectors 17 based on the count.

Furthermore, according to the first embodiment, the ideal distribution 60a may be a distribution in which the count decreases as the depth increases. In this case, it is possible, in addition to the above-described effects, to calibrate the DOI detectors with high precision as the depth at which the gamma ray causes an interaction increases.

In addition, according to the first embodiment, the ideal distribution 60a may be a distribution that follows the formula I=Io exp(-µt), where t denotes a depth, I denotes a count at the depth t, Io denotes a count in the vicinity of the surface of the DOI detector 17, and µ denotes an attenuation coefficient of the gamma ray in the scintillator crystal. In this case, since a more accurate ideal distribution can be expressed, the DOI detectors can be calibrated with higher precision.

### (Modifications of First Embodiment)

The modifications can be similarly applied to the embodiments to be described later.

### (First Modification)

In the first embodiment, the depth represented by ideal distributions 60, 60a is a depth at which a gamma ray made incident on a DOI detector 17, which is one a pair of opposing DOI detectors 17, 17A, causes an interaction; however, the configuration is not limited thereto. That is, an ideal correlation with a DOI detector other than opposing DOI detectors 17A may be used, to increase the statistics and complete calibration in a shorter period of time. For example, the depth represented by the ideal distributions 60 and 60a may be, in addition to the above-described depth, a depth at which a gamma ray is diagonally incident on a DOI detector adjacent to one of a pair of opposing DOI detectors 17. In this case, DOI information indicating a depth at which the gamma ray 30 that has been made diagonally incident causes an interaction 34 denotes a depth deviated from of the depth represented by the DOI information according to the first embodiment. This is because, since the gamma ray 30 has been made diagonally incident, a photon 40 cannot reach the optical sensors 172 unless a large distance is traveled. Accordingly, due to the deviation caused by the diagonal incidence, the ideal distribution 60b will not be in the form of a simple straight line but will be an uneven distribution with a peak, as shown in FIG. 12, for example. According to the first modification, which is different merely in the form of the ideal distributions 60 and 60a, advantageous effects similar to the above-described effects are achieved. Moreover, according to the first modification, since detection data obtained by the diagonally incident gamma ray is used in addition to the detection data used in the first embodiment, it is possible to increase the statistics for calibration and to complete calibration in a shorter period of time.

### (Second Modification)

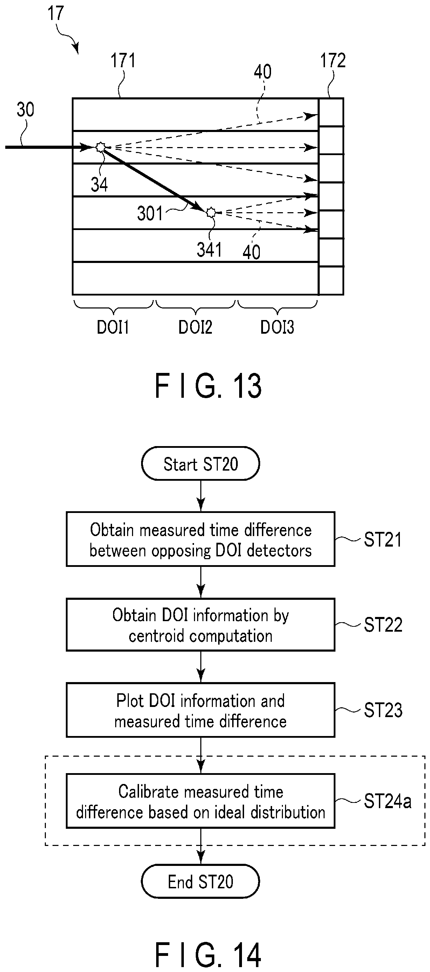

In the first embodiment, the depth represented by the ideal distributions 60, 60a, and 60b is a depth at which a gamma ray made incident on a DOI detector 17 causes an interaction; however, the configuration is not limited thereto. That is, an ideal correlation including an event caused by Compton scattering may be used, to increase the statistics and complete calibration in a shorter period of time. The depth represented by the ideal distribution 60 may include both a depth at which a gamma ray that has been made incident on a DOI detector causes an interaction and a depth at which a scattering gamma ray caused by Compton scattering of the incident gamma ray causes an interaction. In this case, if the energy is fixed at the time of production of Compton scattering, the scattering angle will also be fixed. As shown in FIG. 13, for example, some of the incident gamma rays 30 are converted into photons 40 by an interaction 34 and detected by the optical sensors 172, and some other gamma rays 30 are Compton-scattered and travel as scattered gamma rays 301 along a path according to the scattering angle. The scattered gamma rays 301 are converted into photons 40 by an interaction 341, and are detected by the optical sensors 172. The path of the scattered gamma rays 301 caused by Compton scattering can be speculated by a physical simulation using the energy and the scattering angle of the gamma rays 30. In FIG. 13, the depth at which the incident gamma ray 30 has caused the interaction 34 can be obtained as DOI information DOI1 based on a breadth of photons 40, similarly to the above-described case. Similarly to the above-described case, in FIG. 13, the depth at which the scattering gamma ray 301 has caused the interaction 341 can be obtained as DOI information DOI2 based on a breadth of photons 40, similarly to the above-described case. According to the second modification, since detection data of the scattering gamma rays 301 caused by Compton scattering is used in addition to the detection data used in the first embodiment and the first modification, it is possible to increase the statistics for calibration and to complete calibration in a shorter period of time.

### (Third Modification)

According to the first embodiment, the number of items into which the DOI information is divided is three; however, the configuration is not limited thereto. For example, the DOI information may be divided into two items or a given number of items equal to or greater than four. That is, since an overlap between DOI information items occurs according to the degree of temporal resolution, the number of items into which the DOI information is divided may be varied according to the performance of the temporal resolution, and the width in the depth direction may be varied among the units into which the DOI information is divided. If, for example, the temporal resolution is high, it is preferable that the DOI information be divided into a large number of items and have a small width in the depth direction. The same applies to a depth at which DOI information with high precision can be obtained and a depth at which an interaction frequently occurs. If the temporal resolution is low, it is preferable that the DOI information be divided into a small number and have a large width in the depth direction. According to the third modification, it is possible, in addition to the above-described effect, to improve the spatial resolution according to the degree of temporal resolution.

### <Second Embodiment>

The second embodiment is, unlike the first embodiment in which DOI information is corrected to improve the spatial resolution, measured time-difference information is corrected to improve the temporal resolution. That is, the second embodiment is configured to correct time-difference information using DOI information in the case where the DOI information has a higher precision than the time-difference information.

In accordance therewith, the calibrating function 733 of the processing circuitry 73 corrects a time difference between the DOI detectors 17 to be calibrated having acquired detection data to be close to an ideal distribution. The calibrating function 733 and the processing circuitry 73 are examples of the calibrating unit.

The remaining configuration is similar to that of the first embodiment.

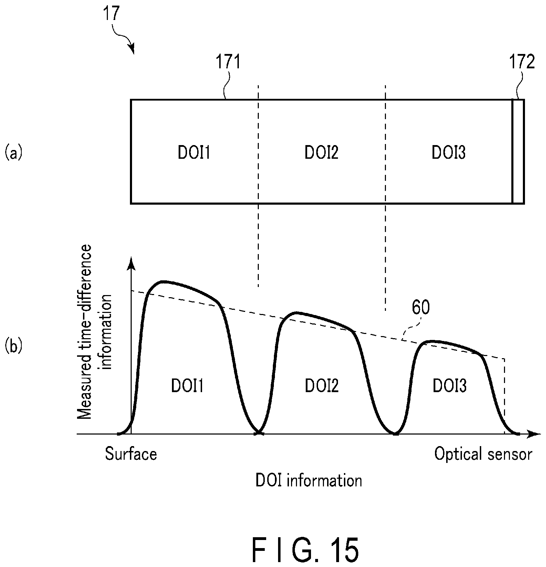

Next, an operation of the PET apparatus 1 with the above-described configuration will be described with reference to the flowchart of FIG. 14 and the schematic diagram of FIG. 15.

First, step ST10 is executed in a manner similar to the foregoing.

After step ST10, the processing circuitry 73 calibrates, at step ST20, the DOI detectors 17 based on the obtained items of detection data and the ideal distribution of the plurality of items of detection data. If the PET gantry 10 has a low temporal resolution, the relationship between the DOI information and the measured time difference assumes a shape of a plurality of gentle-slope distributions that protrude from the ideal distribution at the top, as shown in FIG. 15. That is, FIG. 15(a) shows a case where the actual DOI information is divided into three items in a depth direction of the scintillator crystal 171, similarly to the above-described case. FIG. 15(b) shows a relationship between the DOI information divided into three items and the measured time difference. In FIG. 15(b), the relationship between actual DOI information items DOI1 to DOI3 and the measured time difference is shown in such a manner that convex distributions each denoting a proportional relationship for each of the DOI information items DOI1, ..., and DOI3 protrude from the ideal distribution 60 at the centers of the convex shapes, and edges of the convex shapes do not overlap adjacent ones. Because of the low temporal resolution, such an actual relationship exceeds the ideal distribution at the centers for each of the DOI information items, and because of the high spatial resolution, the distributions of the DOI information items do not overlap at their edges. Accordingly, if the ideal distribution 60 denoting the above-described proportional relationship is superimposed on the actual relationship, an error of each of the distributions of the respective DOI information items from the ideal distribution 60 becomes large at the central parts of the convex shapes. Accordingly, the calibrating function 733 corrects the measured time-difference information in the DOI detector 17 to be calibrated so as to be close to the ideal distribution 60. Referring back to FIG. 14, step ST20 includes steps ST21 to ST23 and ST24a.

Steps ST21 to ST23 are executed in a manner similar to the foregoing.

After step ST23, the processing circuitry 73 calibrates, at step ST24, the measured time-difference information based on the ideal distribution. That is, the processing circuitry 73 corrects the measured time-difference information in the DOI detector 17 to be calibrated so as to be close to the ideal distribution 60. With the foregoing, step ST20 including steps ST21 to ST23 and ST24a ends.

The processing at step ST30 and thereafter is executed similarly to the above-described case.

According to the second embodiment, as described above, the processing circuitry 73 corrects a time difference between DOI detectors 17 to be calibrated having acquired detection data to be close to the ideal distribution. Accordingly, it is possible to calibrate the DOI detectors in a manner similar to the first embodiment. Specifically, according to the second embodiment, it is possible, if a temporal resolution relating to a measured time difference is lower than a spatial resolution relating to a depth, to improve the temporal resolution by correcting the measured time-difference information to be close to an ideal distribution 60. According to the second embodiment, it is possible to obtain advantageous effects other than correction of the DOI information in a manner similar to the first embodiment.

According to at least one of the above-described embodiments, it is possible to calibrate the DOI detectors.

The term "processor" used in the above explanation refers to, for example, circuitry such as a central processing unit (CPU), a graphics processing unit (GPU), an application-specific integrated circuit (ASIC), a programmable logic device (e.g., a simple programmable logic device (SPLD), a complex programmable logic device (CPLD), a field programmable gate array (FPGA)), etc. If, for example, the processor is a CPU, the processor reads and executes programs stored in storage circuitry to execute the respective functions. On the other hand, if the processor is an ASIC, for example, the functions are directly incorporated into the circuitry of the processor as logic circuits, instead of the programs being stored in the storage circuitry. Each processor of the above embodiments is not necessarily configured as a single circuit, and may be configured by a combination of a plurality of independent circuits to implement its functions. Furthermore, the components shown in FIG. 1 may be integrated into a single processor to implement their functions.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A positron emission tomography (PET) apparatus comprising processing circuitry configured to:
obtain a plurality of items of detection data each corresponding to a depth at which a gamma ray has caused an interaction in a plurality of depth-of-interaction (DOI) detectors; and
calibrate the plurality of DOI detectors based on each of the obtained plurality of items of detection data and an ideal distribution of the plurality of items of detection data.

2. The PET apparatus according to claim 1, wherein
the ideal distribution is a distribution that represents, in association with each other, a depth at which a gamma ray causes an interaction in each of the plurality of DOI detectors to be calibrated and a time difference among the plurality of DOI detectors acquiring corresponding items of detection data.

3. The PET apparatus according to claim 2, wherein
the ideal distribution is a distribution in which the time difference decreases as the depth increases.

4. The PET apparatus according to claim 2, wherein
the depth represented by the ideal distribution is a depth at which a gamma ray made incident on one of a pair of opposing DOI detectors included in the plurality of DOI detectors causes an interaction.

5. The PET apparatus according to claim 2, wherein
the depth represented by the ideal distribution is a depth at which a gamma ray made diagonally incident on a DOI detector adjacent to one of a pair of opposing DOI detectors causes an interaction.

6. The PET apparatus according to claim 2, wherein
the depth represented by the ideal distribution includes both a depth at which a gamma ray that has been made incident on the plurality of DOI detectors causes an interaction and a depth at which a scattering gamma ray caused by Compton scattering of the incident gamma ray causes an interaction.

7. The PET apparatus according to claim 2, wherein
the processing circuitry is configured to correct the depth corresponding to each of the plurality of items of detection data in the plurality of DOI detectors to be calibrated to be close to the ideal distribution.

8. The PET apparatus according to claim 7, wherein
the processing circuitry is configured to correct, for each of the plurality of items of detection data, a time shift due to a difference in a rise time between output signals from the plurality of DOI detectors prior to the correcting based on the ideal distribution.

9. The PET apparatus according to claim 2, wherein
the processing circuitry is configured to correct a time difference between the plurality of DOI detectors to be calibrated having acquired the detection data to be close to the ideal distribution.

10. The PET apparatus according to claim 1, wherein
the ideal distribution is a distribution that represents, in association with each other, a depth at which a gamma ray causes an interaction in each of the plurality of DOI detectors to be calibrated and a count of photons produced by the interaction with the gamma ray in each of the plurality of DOI detectors to be calibrated.

11. The PET apparatus according to claim 10, wherein
the ideal distribution is a distribution in which the count decreases as the depth increases.

12. The PET apparatus according to claim 10, wherein
the ideal distribution is a distribution that follows I=Io exp(-µt), where t denotes the depth, I denotes the count at the depth t, Io denotes the count in a vicinity of a surface of each of the plurality of the DOI detectors, and µ denotes an attenuation coefficient of the gamma ray in each of the plurality of DOI detectors.

13. A calibration method, comprising:
obtaining a plurality of items of detection data each corresponding to a depth at which a gamma ray has caused an interaction in a plurality of DOI detectors; and
calibrating the plurality of DOI detectors based on each of the obtained plurality of items of detection data and an ideal distribution of the plurality of items of detection data.
